(19) Europäisches Patentamt
European Patent Office
Office européen des brevets

(11) **EP 3 785 437 B1**

(12) **EUROPEAN PATENT SPECIFICATION**

(45) Date of publication and mention of the grant of the patent:
**01.04.2026 Bulletin 2026/14**

(21) Application number: **19793693.3**

(22) Date of filing: **23.04.2019**

(51) International Patent Classification (IPC):
***H04N 19/159*** (2014.01) ***H04N 19/105*** (2014.01)
***H04N 19/176*** (2014.01) ***H04N 19/172*** (2014.01)
***H04N 19/174*** (2014.01) ***H04N 19/186*** (2014.01)
***H04N 19/593*** (2014.01)

(52) Cooperative Patent Classification (CPC):
**H04N 19/186; H04N 19/105; H04N 19/159; H04N 19/172; H04N 19/174; H04N 19/176; H04N 19/593**

(86) International application number:
**PCT/CN2019/083808**

(87) International publication number:
**WO 2019/206115 (31.10.2019 Gazette 2019/44)**

(54) **METHOD AND APPARATUS FOR RESTRICTED LINEAR MODEL PARAMETER DERIVATION IN VIDEO CODING**

VERFAHREN UND VORRICHTUNG ZUR EINGESCHRÄNKTEN LINEAREN MODELLPARAMETERABLEITUNG IN DER VIDEOCODIERUNG

PROCÉDÉ ET APPAREIL POUR LA DÉDUCTION D’UN PARAMÈTRE DE MODÈLE LINÉAIRE RESTREINT DANS UN SYSTÈME DE CODAGE VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2018 US 201862661661 P**
**17.07.2018 US 201862699015 P**

(43) Date of publication of application:
**03.03.2021 Bulletin 2021/09**

(60) Divisional application:
**26159406.3**

(73) Proprietor: **HFI Innovation Inc.**
**Hsinchu County 302 (TW)**

(72) Inventors:
- **TSAI, Chia-Ming**
  **Hsinchu City 30078 (TW)**
- **HSU, Chih-Wei**
  **Hsinchu City 30078 (TW)**
- **CHEN, Ching-Yeh**
  **Hsinchu City 30078 (TW)**
- **CHUANG, Tzu-Der**
  **Hsinchu City 30078 (TW)**
- **HUANG, Yu-Wen**
  **Hsinchu City 30078 (TW)**

(74) Representative: **Patentship Patentanwaltsgesellschaft mbH**
**Paul-Gerhardt-Allee 50**
**81245 München (DE)**

(56) References cited:
**WO-A1-2017/139937** **CN-A- 103 918 269**
**CN-A- 104 871 537** **CN-A- 107 409 209**
**US-A1- 2012 287 995** **US-A1- 2012 328 013**
**US-A1- 2016 309 184** **US-A1- 2017 359 595**
**US-A1- 2018 077 426**

- **GUO M ET AL: "Intra Chroma LM Mode with Reduced Line Buffer", no. JCTVC-F121, 16 July 2011 (2011-07-16), XP030228843, Retrieved from the Internet <URL:http://phenix.int-evry.fr/jct/doc_end_user/documents/6_Torino/wg11/JCTVC-F121-v2.zip JCTVC-F121.doc> [retrieved on 20110716]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- GISQUET (CANON) C ET AL: "Non-CE6a: Border adaptive decimation for LM mode", no. JCTVC-H0176, 3 February 2012 (2012-02-03), XP030232311, Retrieved from the Internet <URL:http://phenix.int-evry.fr/jct/doc_end_user/documents/8_San%20Jose/wg11/JCTVC-H0176-v3.zip JCTVC-H0176_r1.docx> [retrieved on 20120203]
- C-Y CHEN ET AL: "Non-RCE1: Multiple LM chroma modes", 13. JCT-VC MEETING; 104. MPEG MEETING; 18-4-2013 - 26-4-2013; INCHEON; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-M0116, 8 April 2013 (2013-04-08), XP030114073
- KIM (SAMSUNG) C ET AL: "Unification of the Availability Checking method for Intra prediction", no. JCTVC-F477, 12 July 2011 (2011-07-12), XP030228436, Retrieved from the Internet <URL:http://phenix.int-evry.fr/jct/doc_end_user/documents/6_Torino/wg11/JCTVC-F477-v2.zip JCTVC-F477.docx> [retrieved on 20110712]
- SJ�BERG (ERICSSON) R ET AL: "Description of SDR and HDR video coding technology proposal by Ericsson and Nokia", no. JVET-J0012, 13 April 2018 (2018-04-13), XP030248173, Retrieved from the Internet <URL:http://phenix.int-evry.fr/jvet/doc_end_user/documents/10_San%20Diego/wg11/JVET-J0012-v2.zip JVET-J0012_r1.docx> [retrieved on 20180413]

## Description

### FIELD OF THE INVENTION

The present invention relates to video coding. In particular, the present invention relates to coding techniques associated with Intra prediction using linear mode with restricted data.

### BACKGROUND AND RELATED ART

Motion compensated inter-frame coding has been widely adopted in various coding standards, such as MPEG-1/2/4 and H.261/H.263/H.264/AVC. While motion-compensated inter-frame coding can effectively reduce bitrate for compressed video, Intra coding is required to compress the regions with high motion or scene changes. Besides, Intra coding is also used to process an initial picture or to periodically insert I-pictures or I-blocks for random access or for alleviation of error propagation. Intra prediction exploits the spatial correlation within a picture or within a picture region. In practice, a picture or a picture region is divided into blocks and the Intra prediction is performed on a block basis. Intra prediction for a current block can rely on pixels in neighboring blocks that have been processed. For example, if blocks in a picture or picture region are processed row by row first from left to right and then from top to bottom, neighboring blocks on the top and neighboring blocks on the left of the current block can be used to form Intra prediction for pixels in the current block. While any pixels in the processed neighboring blocks can be used for Intra predictor of pixels in the current block, very often only pixels of the neighboring blocks that are adjacent to the current block boundaries on the top and on the left are used.

The Intra predictor is usually designed to exploit spatial features in the picture such as smooth area (DC mode), vertical line or edge, horizontal line or edge and diagonal line or edge. Furthermore, spatial correlation often exists between the luminance (luma) and chrominance (chroma) components. Therefore, reconstructed luma pixels can be used to derive the Intra chroma prediction. In the emerging High Efficiency Video Coding (HEVC), a chroma Intra prediction mode based on the reconstructed luminance signal has been considered. This type of chroma Intra prediction is termed as *Linear Model (LM) prediction.* Fig. 1 illustrates the Intra prediction derivation for LM mode. First, the neighboring reconstructed pixels (indicated by circles) of a collocated luma block(i.e., Y block) and the neighboring reconstructed pixels (indicated by circles) of a chroma block (i.e., U or V block)in Fig. 1 are used to derive the linear model parameters between the blocks. The predicted pixels of the chroma block are generated using the parameters and the reconstructed pixels of the luma block. In the parameters derivation, the top reconstructed pixel row adjacent to the top block boundary of the current luma block and the left reconstructed pixel column adjacent to the left block boundary of the current luma block are used. It is noted that the second left reconstructed pixel column from the left boundary is used instead of the left column immediately adjacent to the left boundary in order to match the sampling locations of the chroma pixels. The specific row and column of the luma block are used in order to match the 4:2:0 sampling format of the chroma components. While Fig. 1 illustrates the example of LM chroma mode for the 4:2:0 sampling format, the LM chroma mode for other chroma sampling format may also derived similarly.

According to the LM prediction mode, the chroma values are predicted from reconstructed luma values of a collocated block. The chroma components may have lower spatial resolution than the luma component. In order to use the luma signal for chroma Intra prediction, the resolution of the luma signal may have to be reduced to match with that of the chroma components. For example, for the 4:2:0 sampling format, the U and V components only have half of the number of samples in vertical and horizontal directions as the luma component. Therefore, 2:1 resolution reduction in vertical and horizontal directions has to be applied to the reconstructed luma samples. The resolution reduction can be achieved by down-sampling process or sub-sampling process.

In LM chroma mode, for a to-be-predicted chroma sample *V* with its collocated reconstructed luma sample $V_{col}$, the linear model to generate LM predictor P is formulated as follows:

$$P = a \cdot V_{col} + b$$

In the above equation, *a* and b are referred as LM parameters. The LM parameters can be derived from the neighboring reconstructed luma and chroma samples around the current block so that the parameters do not need to be coded in the bitstream. After deriving the LM parameters, chroma predictors can be generated from the collocated reconstructed luma samples in the current block according to the linear model. For example, if the video format is YUV420, then there are one 8x8 luma block and two 4x4 chroma blocks for each 8x8 coding unit, as shown in Fig. 1. In Fig. 1, each small square corresponds to one pixel in the current coding unit (2Nx2N for luma and NxN for chroma) to be coded. The LM parameters are derived first based on neighboring reconstructed samples of the current coding unit, which are represented as circles in Fig. 1. Due to the YUV420 sampling format, the collocated chroma position is located between two corresponding vertical luma samples. An average value between two corresponding vertical luma samples is used to derive the LM parameters. For neighboring pixels above the top block boundary, the average value is replaced by the closest sample in the vertical direction in order to reduce the line buffer requirement. The neighboring pixels (as shown in circles) of the currently luma (Y) and chroma (U or V) coding units are used to derive the LM parameters for the respective chroma component as shown in Fig. 1. After the LM parameters are derived, the chroma predictors are generated based on the linear model and the collocated luma reconstructed samples. According to the video format, an average luma value may be used instead of the corresponding luma sample.

It is desirable to develop improved method that may further improve the performance and/or reduce the buffer requirement of chroma Intra prediction.

US 2017/0359595 A1 discloses methods for video encoding or decoding with linear model (LM) prediction. Border-adaptive subsampling for LM mode is discussed in "Non-CE6a: Border-adaptive subsampling for LM mode", C. Gisquet et al., 8. JCT-VC Meeting, USA, 1 - 10 February 2012.

## BRIEF SUMMARY OF THE INVENTION

The present invention is set out in the appended set of claims.

Methods and apparatus for cross-color Intra prediction using a linear model (referred as LM mode or LM Intra mode) are disclosed. An LM coded block normally uses neighboring reconstructed areas comprising a top area and a left area of the LM coded block to derive an LM parameter set of the LM coded block associated with a linear model relating luma pixels and chroma pixels of the LM coded block. The top area of the LM coded block comprises N top lines of top neighboring reconstructed luma samples and the left area of the LM coded block comprises N left lines of left neighboring reconstructed luma samples. N is an integer selected from a range including a value greater than 1.According to one method, when a current top area or a current left area of the current block is across a restricted boundary, a current LM parameter set is derived for the current block based on the luma pixels and the chroma pixels in reduced neighboring reconstructed areas. A cross-color Intra predictor is generated for the chroma pixels of the current block according to the luma pixels of the current block and the current LM parameters and the chroma pixels of the current block are encoded or decoded using the cross-color Intra predictor. The reduced neighboring reconstructed areas comprise a reduced top area having less than N top lines of top neighboring reconstructed luma samples if the current top area is across the restricted boundary or the reduced neighboring reconstructed areas comprise a reduced left area having less than N left lines of left neighboring reconstructed luma samples if the current left area is across the restricted boundary.

The restricted boundary corresponds to a CTU (coding tree unit) boundary, slice boundary, tile boundary, tile group boundary, or picture boundary. In one example, N is equal to 2 and the reduced top area includes 1 top line if the current top area is across the restricted boundary or the reduced left area includes 1 left line if the current left area is across the restricted boundary.

In another case, an LM coded block normally uses neighboring reconstructed areas comprising a top area and a left area of the LM coded block to derive an LM parameter set of the LM coded block associated with a linear model relating luma pixels and chroma pixels of the LM coded block. According to another method, when a current top area or a current left area of the current block is across a restricted boundary, a current LM parameter set is derived for the current block based on the luma pixels and the chroma pixels in a modified neighboring reconstructed region. A cross-color Intra predictor is generated for the chroma pixels of the current block according to the luma pixels of the current block and the current LM parameters and the chroma pixels of the current block are encoded or decoded using the cross-color Intra predictor. The modified neighboring reconstructed region comprises only left neighboring reconstructed pixels of the current block if the current top area is across the restricted boundary or only top neighboring reconstructed pixels of the current block if the current left area is across the restricted boundary.

In one approach, said only left neighboring reconstructed pixels of the current block corresponds to an expanded left area having additional left lines than the left area of the current block or said only top neighboring reconstructed pixels of the current block corresponds to an expanded top area having additional top lines than the top area of the current block. In another embodiment, only left neighboring reconstructed pixels of the current block corresponds to the left area of the current block or said only top neighboring reconstructed pixels of the current block corresponds to the top area of the current block. In yet another embodiment, the top area of the current block corresponds to an above area, an above and above-right area, or an above-right area of the current block, and the left area of the current block corresponds to a left area, a left and left-bottom area, or a left-bottom area of the current block.

In yet another case, cross-color Intra prediction with multi-LM modes based on reconstructed pixels using multi-LM modes is used. The multi-LM modes comprise a Left-only mode using only left neighboring reconstructed pixels of a multi-LM modes coded block, a Top-only mode using only top neighboring reconstructed pixels of the multi-LM modes coded block, and a Left+Top mode using both the left neighboring reconstructed pixels and the top neighboring reconstructed pixels of the multi-LM modes coded block. According to yet another method, when current left neighboring reconstructed pixels or current top neighboring reconstructed pixels of the current block are across the restricted boundary, a set of reduced multi-LM modes is derived by excluding the Left-Only mode implicitly if the current left neighboring reconstructed pixels of the current block are across the restricted boundary. The set of reduced multi-LM modes is derived by excluding the Top-Only mode implicitly if the current top neighboring reconstructed pixels of the current block are across the restricted boundary. In an example, said excluding the Left-Only mode or said excluding the Top-Only mode is indicated implicitly without signaling an indicator.

Another aspect of the invention relates to an apparatus for cross-color Intra prediction based on reconstructed pixels using multi-LM modes in a video encoder or decoder, wherein the multi-LM modes comprise a Left-only mode using only left neighboring reconstructed pixels of a multi-LM modes coded block, a Top-only mode using only top neighboring reconstructed pixels of the multi-LM modes coded block, and a Left+Top mode using both the left neighboring reconstructed pixels and the top neighboring reconstructed pixels of the multi-LM modes coded block. The apparatus comprises one or more electronics or processors arranged to: receive input data at an encoder side or a decoder side, wherein the input data comprise pixel data associated with a current block to be encoded at the encoder side or compressed data associated with the current block to be decoded at the decoder side; when current left neighboring reconstructed pixels or current top neighboring reconstructed pixels of the current block are across a restricted boundary: derive a set of reduced multi-LM modes by excluding the Left-Only mode if the current left neighboring reconstructed pixels of the current block are across the restricted boundary or excluding the Top-Only mode if the current top neighboring reconstructed pixels of the current block are across the restricted boundary; and encode or decode chroma pixels of the current block using the set of reduced multi-LM modes.

## BRIEF DESCRIPTION OF THE DRAWINGS

Fig. 1 illustrates an example of derivation of chroma Intra prediction for LM mode based on reconstructed luma pixels according to a conventional method for a 4:2:0 sampling format.

Fig. 2A illustrates an example for a luma block and chroma block at the top boundary of a slice, a tile, a tile group, or a picture, where the top neighboring samples are across the restricted boundary (i.e., non-accessible).

Fig. 2B illustrates another example for a luma block and chroma block at the left boundary of a slice, a tile, a tile group, or a picture, where the left neighboring samples are across a restricted boundary (i.e., non-accessible).

Fig. 3A illustrates an example of deriving the LM parameter set using only left neighboring reconstructed samples of the current block if the top neighboring reconstructed samples are across a restricted boundary (i.e., inaccessible) according to an embodiment of the present invention.

Fig. 3B illustrates an example of deriving the LM parameter set using only top neighboring reconstructed samples of the current block if the left neighboring reconstructed samples are across a restricted boundary (i.e., inaccessible) according to an embodiment of the present invention.

Fig. 4A illustrates examples of deriving the LM parameter set using more additional neighboring reconstructed samples from only above, above + above-left, or only above-left region for the LM parameter derivation of access restricted LM model.

Fig. 4B illustrates examples of deriving the LM parameter set using more additional neighboring reconstructed samples from only left, left + left-bottom, or only left-bottom region for the LM parameter derivation of access restricted LM model.

Fig. 5A illustrates an example of Left+Top LM mode for a luma block and a chroma block.

Fig. 5B illustrates an example of Left LM mode for a luma block and a chroma block.

Fig. 5C illustrates an example of Top LM mode for a luma block and a chroma block.

Fig. 6A illustrates an example of the first candidate (i.e., the first left line) in the case that two left neighboring reconstructed samples are allowed.

Fig. 6B illustrates an example of the second candidate (i.e., the second left line) in the case that two left neighboring reconstructed samples are allowed.

Fig. 6C illustrates an example of the second candidate (i.e., both the first and the second left lines) in the case that two left neighboring reconstructed samples are allowed.

Fig. 7A illustrates an example of the first candidate (i.e., the first top line) in the case that two top neighboring reconstructed samples are allowed.

Fig. 7B illustrates an example of the second candidate (i.e., the second top line) in the case that two top neighboring reconstructed samples are allowed.

Fig. 7C illustrates an example of the second candidate (i.e., both the first and the second top lines) in the case that two top neighboring reconstructed samples are allowed.

Fig. 8 illustrates an exemplary flowchart for LM Intra mode using restricted neighboring reconstructed pixels for deriving the LM parameters according to an embodiment of the present invention.

Fig. 9 illustrates an exemplary flowchart for LM Intra mode using restricted neighboring reconstructed pixels for deriving the LM parameters according to an embodiment of the present invention.

Fig. 10 illustrates an exemplary flowchart for LM Intra mode using restricted neighboring reconstructed pixels for deriving the LM parameters according to an embodiment of the present invention.

## DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is determined by reference to the appended claims.

In the linear mode, the chroma predictor uses top and left neighboring reconstructed samples to derive LM parameters between cross-color components, as shown in Fig. 1. However, in some circumstances, the top and/or left neighboring reconstructed samples may not be available. In the present invention, various methods are disclosed to address the issue of unavailable neighboring samples.

## Additional Accessible Neighboring Reconstructed Samples for LM Parameter Derivation

In some cases, especially at slice or picture boundary, only top or left neighboring samples are accessible in LM parameter derivation. For example, Fig. 2A illustrates an example for a luma block 210 and chroma block 220 at the top boundary of a slice or a picture, where the top neighboring samples are across the restricted boundary (i.e., inaccessible). Fig. 2B illustrates another example for a luma block 230 and chroma block 240 at the left boundary of a slice or a picture, where the left neighboring samples are across a restricted boundary (i.e., inaccessible). The inaccessible neighboring samples may induce an issue that the derived LM parameters are not accurate enough to characterize the relations between cross-color components. Therefore, according to one method of the present invention, when left or top neighboring reconstructed samples are not accessible for the current block, additional neighboring reconstructed samples from the accessible above-side or accessible left-side of the current block are used in LM parameter derivation. In some embodiments, if at least some of left neighboring reconstructed samples are not accessible for the current block, the left neighboring reconstructed samples are determined to be not accessible for the current block. In some embodiments, if at least some of top neighboring reconstructed samples are not accessible for the current block, the top neighboring reconstructed samples are determined to be not accessible for the current block. The restricted boundary mentioned in this invention can be a CTU boundary, slice boundary, tile boundary, tile group boundary, picture boundary, or any other boundary that causes the limitation or shortage to reference the neighboring reconstructed samples (i.e., if the limitation or shortage to the neighboring reconstructed samples occurs, the neighboring samples are determined to be across a restricted boundary where the limitation or shortage occurs).

In one example, if one line of top and left neighboring reconstructed samples are normally used in LM parameter derivation and only top neighboring reconstructed samples are across a restricted boundary (i.e., inaccessible) for the current block, then two lines of left neighboring reconstructed samples are used in the LM parameter derivation, as shown in Fig. 3A. In still another embodiment, if only the top neighboring reconstructed samples are across restricted boundary, then only two or more lines of left neighboring reconstructed samples are used in the LM parameter derivation.

In another example, if one line of top and left neighboring reconstructed samples are normally used in the LM parameter derivation, and only left neighboring reconstructed samples are across a restricted boundary, then two lines of top neighboring reconstructed samples are used in the LM parameter derivation, as shown in Fig. 3B. In still another embodiment, if only the left neighboring reconstructed samples are across restricted boundary, then only two or more lines of top neighboring reconstructed samples are used in the LM parameter derivation.

In still another example, if K lines of top and left neighboring reconstructed samples are normally used in the LM parameter derivation and only top neighboring reconstructed samples are accessible for the current block, then $(K + L)$ lines of top neighboring reconstructed samples are used in the LM parameter derivation, where $K$ and $L$ are equal to or larger than 1.

In still another example, if $K$ lines of top and left neighboring reconstructed samples are normally used in the LM parameter derivation and only left neighboring reconstructed samples are accessible for current block, then $(K + L)$ lines of left neighboring reconstructed samples are used in the LM parameter derivation, where $K$ and $L$ are equal to or larger than 1.

In another example, if $N$ lines of top and left neighboring reconstructed luma samples are used in LM parameter derivation, and the top neighboring reconstructed samples are across a restricted boundary, then $k$ lines of top neighboring luma reconstructed samples are used in LM parameter derivation, where $N>k\geq 0$.

In still another example, if $N$ lines of top and left neighboring reconstructed luma samples are used in LM parameter derivation, and the left neighboring reconstructed samples are across a restricted boundary, then $k$ lines of left neighboring luma reconstructed samples are used in the LM parameter derivation, where $N>k\geq 0$.

In still another example, if the top or left neighboring reconstructed samples are across a restricted boundary, then the top or left neighboring reconstructed samples are from the unfiltered reconstructed sample buffer of loop filtering.

In still another example, if any of neighboring reconstructed samples used in the LM parameter derivation are across a restricted boundary, then the LM chroma mode is implicitly or explicitly not used.

Furthermore, if top and left neighboring reconstructed samples are normally used in the LM parameter derivation, and only top neighboring reconstructed samples are accessible for the current block, then additional top neighboring reconstructed samples are used in the LM parameter derivation. The additional top neighboring reconstructed samples can be from only above (410), above + above-right (420), or only above-right regions (430) of the current block, as located in the dots-filled regions in Fig. 4A.

Furthermore, if top and left neighboring reconstructed samples are normally used in LM parameter derivation, and only left neighboring reconstructed samples are accessible for current block, then more left neighboring reconstructed samples are used in LM parameter derivation. The additional left neighboring reconstructed samples can be from only left (440), left + left-bottom (450), or only left-bottom regions (460) of the current block, as located in the dots-filled regions in Fig. 4B.

In the above examples, the YUV420 color sub-sampling format has been used to illustrate the LM parameter derivation process. Nevertheless, the present invention is not restricted to the YUV420 color sub-sampling format. The present invention may also be applied to other color sub-sampling formats such as YUV444 and YUV422.

**Neighboring Reconstructed Samples Selection for LM Parameter Derivation in Multi-LM Chroma Mode**

Multi-LM chroma mode includes Left-Only, Top-Only, Left+Top, and other LM-based chroma modes, where Left-Only or Top-Only LM mode uses only left or top neighboring reconstructed samples in the LM parameter derivation, and Left+Top LM mode uses both left and top neighboring reconstructed samples in the LM parameter derivation. Fig. 5A illustrates an example of Left+Top LM mode for a luma block 510 and a chroma block 520. Fig. 5B illustrates an example of Left LM mode for a luma block 530 and a chroma block 540. Fig. 5C illustrates an example of Top LM mode for a luma block 550 and a chroma block 560. If left neighboring reconstructed samples are acrossa restricted boundary (i.e., in accessible) for the current block, then Left-Only LM mode is implicitly not used in chroma mode decision. The boundary may correspond to a CTU, slice, tile, tile group, or picture boundary. If top neighboring reconstructed samples are acrossa restricted boundary (i.e., inaccessible) for current block, then Top-Only LM mode is implicitly not used in chroma mode decision. In some embodiments, if at least some of left neighboring reconstructed samples are not accessible for the current block, the left neighboring reconstructed samples are determined to be not accessible for the current block. In some embodiments, if at least some of top neighboring reconstructed samples are not accessible for the current block, the top neighboring reconstructed samples are determined to be not accessible for the current block.

In one example, when left or top neighboring reconstructed samples are not accessible for the current block, then both Left-Only and Top-Only LM modes are not used in chroma mode decision. In this case, Left+TopLM mode implicitly uses two lines of left neighboring reconstructed samples in the LM parameter derivation if top neighboring reconstructed samples are not accessible, and two lines of top neighboring reconstructed samples are used in the LM parameter derivation if left neighboring reconstructed samples are not accessible.

In another embodiment, if left neighboring reconstructed samples are not accessible or available for the current block, then Left-Only LM mode is implicitly not used in Multi-LM chroma mode decision, and no indicator is used to indicate whether Left-Only LM mode is used or not.

In one embodiment, when left neighboring reconstructed samples cross a restricted boundary, then both Left-Only and Top-Only LM modes are not used in chroma mode decision. In addition, Left+TopLM mode implicitly uses more than one lines of top neighboring reconstructed samples in the LM parameter derivation.

In another example, when top neighboring reconstructed samples cross a restricted boundary, then both Left-Only and Top-Only LM modes are not used in chroma mode decision. In addition, Left+TopLM mode implicitly uses more than one lines of left neighboring reconstructed samples in the LM parameter derivation.

In still another example, if left neighboring reconstructed samples cross a restricted boundary, then Left-Only LM mode is implicitly not used in Multi-LM chroma mode decision, and no indicator is used to indicate whether Left-Only LM mode is used or not.

In still another example, if top neighboring reconstructed samples are across a restricted boundary (i.e., inaccessible)for the current block, then Top-Only LM mode is implicitly not used in Multi-LM chroma mode decision, and no indicator is used to indicate whether Top-Only LM mode is used or not.

In still another example, when left or top neighboring reconstructed samples are across a restricted boundary (i.e., inaccessible)for the current block, then both Left-Only and Top-Only LM modes are implicitly not used in Multi-LM chroma mode decision, and no indicator is used to indicate whether Left-Only or Top-Only modes is used or not.

In still another example, when left neighboring reconstructed samples are across a restricted boundary (i.e., inaccessible)for the current block, then Left-Only LM mode is not used in chroma mode decision. Besides, Top-Only LM mode uses additional top neighboring reconstructed samples than Left+TopLM mode in LM parameter derivation.

In still another example, when top neighboring reconstructed samples are across a restricted boundary (i.e., inaccessible)for the current block, then Top-Only LM mode is not used in chroma mode decision. Besides, Left-Only LM mode uses additional left neighboring reconstructed samples than Left+TopLM mode in the LM parameter derivation.

Any of the foregoing proposed methods can be implemented in encoders and/or decoders. For example, any of the proposed methods can be implemented in an Inter/Intra/Prediction module of an encoder, and/or an-Inter/Intra/Prediction module of a decoder. Alternatively, any of the proposed methods can be implemented as a circuit coupled to the Inter/Intra/Prediction module of the encoder and/or the Inter/Intra/Prediction module of the decoder, so as to provide the information needed by the Inter/Intra/Prediction module.

Again, in the above examples, the YUV420 color sub-sampling format has been used to illustrate the LM parameter derivation process. Nevertheless, the present invention is not restricted to the YUV420 color sub-sampling format. The present invention may also be applied to other color sub-sampling formats such as YUV444 and YUV422.

Boundary Restrictions for LM parameter derivation when multiple reference lines are allowed

When two or more lines of top and left neighboring reconstructed samples are allowed to be used for deriving LM parameters between cross-color components, and if the above side or left side of the current block is across a restricted boundary (e.g., CTU, slice, tile, tile group, or picture boundary), the lines of neighboring reconstructed samples used for linear model derivation should be constrained. In some embodiments, if at least some of left neighboring reconstructed samples are not accessible for the current block, the left neighboring reconstructed samples are determined to be not accessible for the current block. In some embodiments, if at least some of top neighboring reconstructed samples are not accessible for the current block, the top neighboring reconstructed samples are determined to be not accessible for the current block.

In one embodiment, if the top neighboring reconstructed samples are across a restricted boundary (i.e., inaccessible), then all the left neighboring reconstructed samples are used in LM parameter derivation.

In another example, if the top neighboring reconstructed samples are across a restricted boundary (i.e., inaccessible), then all the top neighboring reconstructed samples are implicitly not used in the LM parameter derivation.

In still another example, if N lines of top and left neighboring reconstructed luma samples are used in the LM parameter derivation, and the top neighboring reconstructed samples are across restricted boundary (i.e., not accessible or not available), then *k* lines of top neighboring luma reconstructed samples are jointly used in the LM parameter derivation, where $N>k\geq 0$.

In still another example, if *N* lines of top and left neighboring reconstructed chroma samples are used in the LM parameter derivation, and the top neighboring reconstructed samples are across a restricted boundary (i.e., inaccessible), then *k* lines of top neighboring chroma reconstructed samples are jointly used in the LM parameter derivation, where $N>k\geq 0$.

In an embodiment, if the top neighboring reconstructed samples are across a restricted boundary (i.e., inaccessible), then a syntax is used to indicate which left line samples or all left line samples are used in the LM parameter derivation. For example, if two left neighboring reconstructed line samples are allowed, a syntax is used to indicate the selection of left line sample candidates, as shown in Fig. 6A for the first candidate (610 and 620), Fig. 6B for the second candidate (630 and 640), and Fig. 6C for the third candidate (650 and 660).

In still another example, if the left neighboring reconstructed samples are across a restricted boundary (i.e., inaccessible), then all the top neighboring reconstructed samples are used in the LM parameter derivation.

In still another example, if the left neighboring reconstructed samples are across restricted boundary (i.e., inaccessible), then all the left neighboring reconstructed samples are implicitly not used in the LM parameter derivation.

In still another example, if *N* lines of top and left neighboring reconstructed luma samples are used in the LM parameter derivation, and the left neighboring reconstructed samples are across a restricted boundary (i.e., inaccessible), then *k* lines of left neighboring luma reconstructed samples are jointly used in the LM parameter derivation, where $N>k\geq 0$.

In still another example, if *N* lines of top and left neighboring reconstructed chroma samples are used in the LM parameter derivation, and the left neighboring reconstructed samples are across a restricted boundary (i.e., inaccessible), then *k* lines of left neighboring chroma reconstructed samples are jointly used in the LM parameter derivation, where $N>k\geq 0$.

In still another embodiment, if the left neighboring reconstructed samples are across a restricted boundary (i.e., inaccessible), then a syntax is used to indicate which top line samples or all top line samples are used in the LM parameter derivation. For example, if two top neighboring reconstructed line samples are allowed, a syntax is used to indicate the selection of top line sample candidates, as shown in Fig. 7A for the first candidate (710 and 720), Fig. 7B for the second candidate (730 and 740), and Fig. 7C for the third candidate (750 and 760).

Note that, the top neighboring reconstructed samples mentioned in this invention can from the above 410, above-right 430, and above + above-right 420, as indicated by the dots-filled regions in 4A. The left neighboring reconstructed samples can be from the left 440, left-bottom 460, and left + left-bottom 450, as indicated by the dots-filled regions in 4B.

In the above examples, the YUV420 color sub-sampling format has been used to illustrate the LM parameter derivation process. Nevertheless, the present invention is not restricted to the YUV420 color sub-sampling format. The present invention may also be applied to other color sub-sampling formats such as YUV444 and YUV422.

Fig. 8 illustrates an exemplary flowchart for LM Intra mode using restricted neighboring reconstructed pixels for deriving the LM parameters according to an example of the present invention. In a normal LM mode, an LM coded block uses neighboring reconstructed areas comprising a top area and a left area of the LM coded block to derive an LM parameter set of the LM coded block, which is associated with a linear model relating luma pixels and chroma pixels of the LM coded block. The top area of the LM coded block comprises N top lines of top neighboring reconstructed luma samples and the left area of the LM coded block comprises N left lines of left neighboring reconstructed luma samples, and N is an integer greater than 1. The steps shown in the flowchart may be implemented as program codes executable on one or more processors (e.g., one or more CPUs) at an encoder side or decoder side. The steps shown in the flowchart may also be implemented based hardware such as one or more electronic devices or processors arranged to perform the steps in the flowchart. According to this method, input data is received at an encoder side or a decoder side in step 810, where the input data comprise pixel data associated with a current block to be encoded at the encoder side or compressed data associated with the current block to be decoded at the decoder side. Whether a current top area or a current left area of the current block is across a restricted boundary is checked in step 820. If the current top area or the current left area of the current block is across a restricted boundary (i.e., the "yes" path from step 820), then steps 830 through 850 are performed. Otherwise (i.e., the "no" path from step 820), steps 830 through 850 are skipped. In step 830, a current LM parameter set is derived for the current block based on the luma pixels and the chroma pixels in reduced neighboring reconstructed areas. The reduced neighboring reconstructed areas comprise a reduced top area having less than N top lines of top neighboring reconstructed luma samples if the current top area is across the restricted boundary or a reduced left area having less than N left lines of left neighboring reconstructed luma samples if the current left area is across the restricted boundary. In step 840, a cross-color Intra predictor is generated for the chroma pixels of the current block according to the luma pixels of the current block and the current LM parameters. In step 850, the chroma pixels of the current block are encoded or decoded using the cross-color Intra predictor.

Fig. 9 illustrates an exemplary flowchart for LM Intra mode using restricted neighboring reconstructed pixels for deriving the LM parameters according to an embodiment of the present invention. In a normal LM mode, an LM coded block normally uses neighboring reconstructed areas comprising a top area and a left area of the LM coded block to derive an LM parameter set of the LM coded block associated with a linear model relating luma pixels and chroma pixels of the LM coded block. According to this method, input data is received at an encoder side or a decoder side in step 910, where the input data comprise pixel data associated with a current block to be encoded at the encoder side or compressed data associated with the current block to be decoded at the decoder side. Whether a current top area or a current left area of the current block is across a restricted boundary is checked in step 920. If the current top area or the current left area of the current block is across a restricted boundary (i.e., the "yes" path from step 920), then steps 930 through 950 are performed. Otherwise (i.e., the "no" path from step 920), steps 930 through 950 are skipped. In step 930, a current LM parameter set is derived for the current block based on the luma pixels and the chroma pixels in a modified neighboring reconstructed region. The modified neighboring reconstructed region comprises only left neighboring reconstructed pixels of the current block if the current top area is across the restricted boundary or only top neighboring reconstructed pixels of the current block if the current left area is across the restricted boundary. In step 940, a cross-color Intra predictor is generated for the chroma pixels of the current block according to the luma pixels of the current block and the current LM parameters. In step 950, the chroma pixels of the current block are encoded or decoded using the cross-color Intra predictor.

Fig. 10 illustrates an exemplary flowchart for LM Intra mode using restricted neighboring reconstructed pixels for deriving the LM parameters according to an example, of the present invention. In a normal multi-LM mode, the multi-LM modes comprise a Left-only mode using only left neighboring reconstructed pixels of a multi-LM modes coded block, a Top-only mode using only top neighboring reconstructed pixels of the multi-LM modes coded block, and a Left+Top mode using both the left neighboring reconstructed pixels and the top neighboring reconstructed pixels of the multi-LM modes coded block. According to this method, input data is received at an encoder side or a decoder side in step 1010, where the input data comprise pixel data associated with a current block to be encoded at the encoder side or compressed data associated with the current block to be decoded at the decoder side. Whether current left neighboring reconstructed pixels or current top neighboring reconstructed pixels of the current block are across a restricted boundary is checked in step 1020. If the current left neighboring reconstructed pixels or current top neighboring reconstructed pixels of the current block are across a restricted boundary (i.e., the "yes" path from step 1020), then steps 1030 through 1040 are performed. Otherwise (i.e., the "no" path from step 1020), steps 1030 through 1040 are skipped. In step 1030, a set of reduced multi-LM modes is derived by excluding the Left-Only mode if the current left neighboring reconstructed pixels of the current block are across the restricted boundary or excluding the Top-Only mode if the current top neighboring reconstructed pixels of the current block are across the restricted boundary. In step 1040, the chroma pixels of the current block are encoded or decoded using the set of reduced multi-LM modes.

The flowcharts shown above are intended to illustrate examples of improved LM chroma mode for a video encoder and a decoder incorporating some aspects of the present invention.

The above description is presented to enable a person of ordinary skill in the art to practice the present invention as provided in the context of a particular application and its requirement. Various modifications to the described embodiments will be apparent to those with skill in the art, and the general principles defined herein may be applied. Therefore, the present invention is not intended to be limited to the particular embodiments shown and described, but is to be accorded the widest scope. In the above detailed description, various specific details are illustrated in order to provide a thorough understanding of the present invention. Nevertheless, it will be understood by those skilled in the art that the present invention may be practiced.

Embodiment of the present invention as described above may be implemented in various hardware, software codes, or a combination of both. For example, an embodiment of the present invention can be a circuit integrated into a video compression chip or program code integrated into video compression software to perform the processing described herein. An embodiment of the present invention may also be program code to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware code may be developed in different programming languages and different formats or styles. The software code may also be compiled for different target platforms. However, different code formats, styles and languages of software codes and other means of configuring code to perform the tasks in accordance with the invention will not depart from the scope of the invention.

The described examples are to be considered in all respects only as illustrative and not restrictive. The scope of the invention is therefore, indicated by the appended claims rather than by the foregoing description.

## Claims

**1.** A method of cross-color Intra prediction based on reconstructed pixels, wherein a linear model, LM, coded block uses neighboring reconstructed areas comprising a top area and a left area of the LM coded block to derive an LM parameter set of the LM coded block associated with a linear model relating luma pixels and chroma pixels of the LM coded block, and the top area of the LM coded block comprises N top lines of top neighboring reconstructed luma samples and the left area of the LM coded block comprises N left columns of left neighboring reconstructed luma samples, and N is an integer greater than 1, the method comprising:

receiving (810) input data at an encoder side or a decoder side, wherein the input data comprise pixel data associated with a current block to be encoded at the encoder side or compressed data associated with the current block to be decoded at the decoder side;

when a current top area or a current left area of the current block is across a restricted boundary (820), wherein the restricted boundary is a CTU boundary, slice boundary, tile boundary, tile group boundary, picture boundary, or any other boundary that causes limitation or shortage to reference the top neighboring reconstructed luma samples and/or the left neighboring reconstructed luma samples:

deriving (830) a current LM parameter set for the current block based on the luma pixels and the chroma pixels in reduced neighboring reconstructed areas, wherein the reduced neighboring reconstructed areas comprise a reduced top area having less than N top lines of top neighboring reconstructed luma samples if the current top area is across the restricted boundary or a reduced left area having less than N left columns of left neighboring reconstructed luma samples if the current left area is across the restricted boundary;

wherein if the top neighboring reconstructed samples are across a restricted boundary and inaccessible, a syntax is used to indicate which left column samples or all left column samples are used in the LM parameter set

derivation, wherein if two left neighboring reconstructed column samples are allowed, the syntax is used to indicate selection of left column sample candidates, wherein the left column sample candidates comprise one left column of left neighboring reconstructed luma samples derived from the second closest left column to the current block, one left column of left neighboring reconstructed luma samples derived from the fourth closest left column to the current block, and two left columns of left neighboring reconstructed luma samples derived from the second and the fourth closest left column to the current block;

wherein if the left neighboring reconstructed samples are across a restricted boundary and inaccessible, the syntax is used to indicate which top line samples or all top line samples are used in the LM parameter set derivation,

wherein if two top neighboring reconstructed line samples are allowed, the syntax is used to indicate selection of top line sample candidates, wherein the top line sample candidates comprise one top line of top neighboring reconstructed luma samples derived from the first closest top line to the current block, one top line of top neighboring reconstructed luma samples derived from the third closest top line to the current block, and two top lines of top neighboring reconstructed luma samples derived from the first and the third closest top line to the current block;

generating (840) a cross-color Intra predictor for the chroma pixels of the current block according to the luma pixels of the current block and the current LM parameter set; and encoding or decoding (850) the chroma pixels of the current block using the cross-color Intra predictor, wherein the linear model to generate a LM predictor P for a to-be-predicted chroma sample with its collocated reconstructed luma sample $V_{col}$ is formulated as:

$$P = a \cdot V_{col} + b$$

2. The method of Claim 1, wherein N is equal to 2 and the reduced top area includes 1 top line if the current top area is across the restricted boundary or the reduced left area includes 1 left column if the current left area is across the restricted boundary.

3. The method of Claim 1, if the top or left neighboring reconstructed samples are across the restricted boundary, then the top or left neighboring reconstructed samples are from the unfiltered reconstructed sample buffer of loop filtering.

4. The method of Claim 1, wherein deriving a current LM parameter set for the current block based on the luma pixels and the chroma pixels in reduced neighboring reconstructed areas, wherein the reduced neighboring reconstructed areas comprise a reduced top area having less than N top lines of top neighboring reconstructed luma samples if the current top area is across the restricted boundary or a reduced left area having less than N left columns of left neighboring reconstructed luma samples if the current left area is across the restricted boundary.

5. An apparatus for cross-color Intra prediction based on reconstructed pixels in a video encoder or decoder, wherein a linear model, LM, coded block uses neighboring reconstructed areas comprising a top area and a left area of the LM coded block to derive an LM parameter set of the LM coded block associated with a linear model relating luma pixels and chroma pixels of the LM coded block, and the top area of the LM coded block comprises N top lines of top neighboring reconstructed luma samples and the left area of the LM coded block comprises N left columns of left neighboring reconstructed luma samples, and N is an integer greater than 1, the apparatus comprising one or more electronics or processors arranged to:

receive (810) input data at an encoder side or a decoder side, wherein the input data comprise pixel data associated with a current block to be encoded at the encoder side or compressed data associated with the current block to be decoded at the decoder side;

when a current top area or a current left area of the current block is across a restricted boundary (820), wherein the restricted boundary is a CTU boundary, slice boundary, tile boundary, tile group boundary, picture boundary, or any other boundary that causes limitation or shortage to reference the top neighboring reconstructed luma samples and/or the left neighboring reconstructed luma samples:

derive (830) a current LM parameter set for the current block based on the luma pixels and the chroma pixels in reduced neighboring reconstructed areas, wherein the reduced neighboring reconstructed areas comprise a reduced top area having less than N top lines of top neighboring reconstructed luma samples if the current top area is across the restricted boundary or a reduced left area having less than N left columns of left neighboring reconstructed luma samples if the current left area is across the restricted boundary;

wherein if the top neighboring reconstructed samples are across a restricted boundary and inaccessible, a syntax is used to indicate which left column samples or all left column samples are used in the LM parameter set

derivation, wherein if two left neighboring reconstructed column samples are allowed, the syntax is used to indicate selection of left column sample candidates, wherein the left column sample candidates comprise one left column of left neighboring reconstructed luma samples derived from the second closest left column to the current block, one left column of left neighboring reconstructed luma samples derived from the fourth closest left column to the current block, and two left columns of left neighboring reconstructed luma samples derived from the second and the fourth closest left column to the current block;

wherein if the left neighboring reconstructed samples are across a restricted boundary and inaccessible, the syntax is used to indicate which top line samples or all top line samples are used in the LM parameter set derivation,

wherein if two top neighboring reconstructed line samples are allowed, the syntax is used to indicate selection of top line sample candidates, wherein the top line sample candidates comprise one top line of top neighboring reconstructed luma samples derived from the first closest top line to the current block, one top line of top neighboring reconstructed luma samples derived from the third closest top line to the current block, and two top lines of top neighboring reconstructed luma samples derived from the first and the third closest top line to the current block;

generate (840) a cross-color Intra predictor for the chroma pixels of the current block according to the luma pixels of the current block and the current LM parameter set; and

encode or decode (850) the chroma pixels of the current block using the cross-color Intra predictor,

wherein the linear model to generate a LM predictor *P* for a to-be-predicted chroma sample with its collocated reconstructed luma sample $V_{col}$ is formulated as:

$$P = a \cdot V_{col} + b$$

## Patentansprüche

1. Ein Verfahren zur farbübergreifenden Intra-Vorhersage basierend auf rekonstruierten Pixeln, wobei ein mit einem linearen Modell, LM, codierter Block benachbarte rekonstruierte Bereiche, die aus einem oberen Bereich und einem linken Bereich des LM-codierten Blocks bestehen, verwendet, um einen LM-Parametersatz des LM-codierten Blocks abzuleiten, der mit einem linearen Modell assoziiert ist, das sich auf die Luma- und Chroma-Pixel des LM-codierten Blocks bezieht, und wobei der obere Bereich des LM-codierten Blocks N obere Zeilen von oberen benachbarten rekonstruierten Luma-Samples und der linke Bereich des LM-codierten Blocks N linke Spalten von linken benachbarten rekonstruierten Luma-Samples umfasst und N eine ganze Zahl größer als 1 ist, wobei das Verfahren umfasst:

    Empfangen von (810) Eingangsdaten auf der Encoderseite oder der Decoderseite, wobei die Eingangsdaten Pixeldaten umfassen, die mit einem aktuellen Block assoziiert sind, der auf der Encoderseite codiert werden soll, oder komprimierte Daten, die dem aktuellen Block zugeordnet sind, der auf der Decoderseite decodiert werden soll;

    wenn sich ein aktueller oberer Bereich oder ein aktueller linker Bereich des aktuellen Blocks über eine beschränkte Grenze hinweg befindet (820), wobei die beschränkte Grenze eine CTU-Grenze, Slice-Grenze, Tile-Grenze, Tile-Gruppengrenze, Bildgrenze oder eine andere Grenze ist, die eine Einschränkung oder einen Mangel bei der Bezugnahme auf die oberen benachbarten rekonstruierten Luma-Samples und/oder die linken benachbarten rekonstruierten Luma-Samples verursacht:

        Ableiten (830) eines aktuellen LM-Parametersatzes für den aktuellen Block auf der Grundlage der Luma-Pixel und der Chroma-Pixel in reduzierten benachbarten rekonstruierten Bereichen, wobei die reduzierten benachbarten rekonstruierten Bereiche einen reduzierten oberen Bereich mit weniger als N oberen Zeilen von oberen benachbarten rekonstruierten Luma-Samples umfassen, wenn sich der aktuelle obere Bereich über die beschränkte Grenze hinweg befindet, oder einen reduzierten linken Bereich mit weniger als N linken Spalten von linken benachbarten rekonstruierten Luma-Samples, wenn sich der aktuelle linke Bereich über die beschränkte Grenze hinweg befindet;

        wobei, wenn sich die oberen benachbarten rekonstruierten Samples über eine beschränkte Grenze hinweg befinden und nicht zugänglich sind, eine Syntax verwendet wird, um anzugeben, welche Samples der linken Spalte oder alle Samples der linken Spalte bei der Ableitung des LM-Parametersatzes verwendet werden; wobei, wenn zwei benachbarte rekonstruierte Samples der linken Spalte zulässig sind, die Syntax verwendet wird, um die Auswahl von Kandidaten für Samples der linken Spalte anzugeben; wobei die Kandidaten für Samples der linken Spalte eine linke Spalte der linken benachbarten rekonstruierten Luma-Samples, die von der zweitnächsten linken Spalte zum aktuellen Block abgeleitet wurden, eine linke Spalte der linken benachbarten rekonstruierten Luma-Samples, die von der viertnächsten linken Spalte zum aktuellen Block abgeleitet wurden, und zwei linke Spalten der linken benachbarten rekonstruierten Luma-Samples, die von der zweit- und der viertnächsten linken Spalte zum aktuellen Block abgeleitet wurden, umfassen;

wobei, wenn sich die linken benachbarten rekonstruierten Samples über eine beschränkte Grenze hinweg befinden und nicht zugänglich sind, die Syntax verwendet wird, um anzugeben, welche Samples der oberen Zeile oder alle Samples der oberen Zeile bei der Ableitung des LM-Parametersatzes verwendet werden; wobei, wenn zwei benachbarte rekonstruierte Samples der oberen Zeile zulässig sind, die Syntax verwendet wird, um die Auswahl von Kandidaten für Samples der oberen Zeile anzugeben; wobei die Kandidaten für Samples der oberen Zeile eine obere Zeile von oberen benachbarten rekonstruierten Luma-Samples, die von der ersten dem aktuellen Block nächstgelegenen oberen Zeile abgeleitet wurden, eine obere Zeile von oberen benachbarten rekonstruierten Luma-Samples, die von der dritten dem aktuellen Block nächstgelegenen oberen Zeile abgeleitet wurden, und zwei obere Zeilen von oberen benachbarten rekonstruierten Luma-Samples, die von der ersten und der dritten dem aktuellen Block nächstgelegenen oberen Zeile abgeleitet wurden, umfassen;

Generieren (840) eines farbübergreifenden Intra-Prädiktors für die Chroma-Pixel des aktuellen Blocks gemäß den Luma-Pixeln des aktuellen Blocks und dem aktuellen LM-Parametersatz; und

Kodieren oder Dekodieren (850) der Chroma-Pixel des aktuellen Blocks unter Verwendung des farbübergreifenden Intra-Prädiktors,

wobei das lineare Modell zur Generierung eines LM-Prädiktors P für ein vorherzusagendes Chroma-Sample mit seinem kollokalisierten rekonstruierten Luma-Sample $V_{col}$ wie folgt formuliert wird:

$$P = a \cdot V_{col} + b .$$

**2.** Das Verfahren nach Anspruch 1, wobei N gleich 2 ist und der reduzierte obere Bereich 1 obere Zeile umfasst, wenn sich der aktuelle obere Bereich über die beschränkte Grenze hinweg befindet, oder der reduzierte linke Bereich 1 linke Spalte umfasst, wenn sich der aktuelle linke Bereich über die beschränkte Grenze hinweg befindet.

**3.** Das Verfahren nach Anspruch 1, wobei, wenn sich die oberen oder linken benachbarten rekonstruierten Samples über die beschränkte Grenze hinweg befinden, die oberen oder linken benachbarten rekonstruierten Samples aus dem ungefilterten rekonstruierten Sample-Puffer der Schleifenfilterung stammen.

**4.** Das Verfahren nach Anspruch 1, wobei ein aktueller LM-Parametersatz für den aktuellen Block auf der Grundlage der Luma-Pixel und der Chroma-Pixel in reduzierten benachbarten rekonstruierten Bereichen abgeleitet wird, wobei die reduzierten benachbarten rekonstruierten Bereiche einen reduzierten oberen Bereich mit weniger als N oberen Zeilen von oberen benachbarten rekonstruierten Luma-Samples umfassen, wenn sich der aktuelle obere Bereich über die beschränkte Grenze hinweg befindet, oder einen reduzierten linken Bereich mit weniger als N linken Spalten von linken benachbarten rekonstruierten Luma-Samples umfassen, wenn sich der aktuelle linke Bereich über die beschränkte Grenze hinweg befindet.

**5.** Eine Vorrichtung zur farbübergreifenden Intra-Vorhersage basierend auf rekonstruierten Pixeln in einem Video-Encoder oder -Decoder, wobei ein mit einem linearen Modell, LM, codierter Block benachbarte rekonstruierte Bereiche, die einen oberen Bereich und einen linken Bereich des LM-codierten Blocks umfassen, verwendet, um einen LM-Parametersatz des LM-codierten Blocks abzuleiten, der mit einem linearen Modell assoziiert ist, das die Luma-Pixel und die Chroma-Pixel des LM-codierten Blocks in Beziehung setzt, und wobei der obere Bereich des LM-codierten Blocks N obere Zeilen von oberen benachbarten rekonstruierten Luma-Samples umfasst und der linke Bereich des LM-codierten Blocks N linke Spalten von linken benachbarten rekonstruierten Luma-Samples umfasst und N eine ganze Zahl größer als 1 ist, wobei die Vorrichtung eine oder mehrere elektronische Einheiten oder Prozessoren umfasst, die dazu eingerichtet sind:

Eingangsdaten auf der Encoderseite oder der Decoderseite zu empfangen (810), wobei die Eingangsdaten Pixeldaten umfassen, die mit einem aktuellen Block assoziiert sind, der auf der Encoderseite codiert werden soll, oder komprimierte Daten, die mit dem aktuellen Block assoziiert sind, der auf der Decoderseite decodiert werden soll;

wenn sich ein aktueller oberer Bereich oder ein aktueller linker Bereich des aktuellen Blocks über eine beschränkte Grenze hinweg befindet (820), wobei die beschränkte Grenze eine CTU-Grenze, Slice-Grenze, Tile-Grenze, Tile-Gruppengrenze, Bildgrenze oder eine andere Grenze ist, die eine Einschränkung oder einen Mangel bei der Bezugnahme auf die oberen benachbarten rekonstruierten Luma-Samples und/oder die linken benachbarten rekonstruierten Luma-Samples verursacht:

einen aktuellen LM-Parametersatz (830) für den aktuellen Block auf der Grundlage der Luma-Pixel und der Chroma-Pixel in reduzierten benachbarten rekonstruierten Bereichen abzuleiten, wobei die reduzierten benachbarten rekonstruierten Bereiche einen reduzierten oberen Bereich mit weniger als N oberen Zeilen von oberen benachbarten rekonstruierten Luma-Samples umfassen, wenn sich der aktuelle obere Bereich über die beschränkte Grenze hinweg befindet, oder einen reduzierten linken Bereich mit weniger als N linken Spalten von linken benachbarten rekonstruierten Luma-Samples umfassen, wenn sich der aktuelle linke Bereich über die beschränkte Grenze hinweg befindet;
wobei, wenn sich die oberen benachbarten rekonstruierten Samples über eine beschränkte Grenze hinweg befinden und nicht zugänglich sind, eine Syntax verwendet wird, um anzugeben, welche Samples der linken Spalte oder alle Samples der linken Spalte bei der Ableitung des LM-Parametersatzes verwendet werden; wobei, wenn zwei linke benachbarte rekonstruierte Spalten-Samples zulässig sind, die Syntax verwendet wird, um die Auswahl von Kandidaten für Samples der linken Spalte anzugeben; wobei die Kandidaten für Samples der linken Spalte eine linke Spalte von linken benachbarten rekonstruierten Luma-Samples, die von der zweitnächsten linken Spalte zum aktuellen Block abgeleitet wurden, eine linke Spalte von linken benachbarten rekonstruierten Luma-Samples, die von der viertnächsten linken Spalte zum aktuellen Block abgeleitet wurden, und zwei linke Spalten von linken benachbarten rekonstruierten Luma-Samples, die von der zweit- und der viertnächsten linken Spalte zum aktuellen Block abgeleitet wurden, umfassen;
wobei, wenn sich die linken benachbarten rekonstruierten Samples über eine beschränkte Grenze hinweg befinden und nicht zugänglich sind, die Syntax verwendet wird, um anzugeben, welche Samples der oberen Zeile oder alle Samples der oberen Zeile bei der Ableitung des LM-Parametersatzes verwendet werden; wobei, wenn zwei obere benachbarte rekonstruierte Zeilen-Samples zulässig sind, die Syntax verwendet wird, um die Auswahl von Kandidaten für Samples der oberen Zeile anzugeben; wobei die Kandidaten für Samples der oberen Zeile eine obere Zeile von oberen benachbarten rekonstruierten Luma-Samples, die von der ersten dem aktuellen Block nächstgelegenen oberen Zeile abgeleitet wurden, eine obere Zeile von oberen benachbarten rekonstruierten Luma-Samples, die von der dritten dem aktuellen Block nächstgelegenen oberen Zeile abgeleitet wurden, und zwei obere Zeilen von oberen benachbarten rekonstruierten Luma-Samples, die von der ersten und der dritten dem aktuellen Block nächstgelegenen oberen Zeile abgeleitet wurden, umfassen;
einen farbübergreifenden Intra-Prädiktor für die Chroma-Pixel des aktuellen Blocks gemäß den Luma-Pixeln des aktuellen Blocks und dem aktuellen LM-Parametersatz zu generieren (840); und
die Chroma-Pixel des aktuellen Blocks unter Verwendung des farbübergreifenden Intra-Prädiktors zu codieren oder zu decodieren (850),
wobei das lineare Modell zur Generierung eines LM-Prädiktors P für ein vorherzusagendes Chroma-Sample mit seinem kollokalisierten rekonstruierten Luma-Sample $V_{col}$ wie folgt formuliert ist:

$$P = a \cdot V_{col} + b .$$

**Revendications**

1. Procédé de prédiction intra-couleur croisée basée sur des pixels reconstruits, dans laquelle un bloc codé par un modèle linéaire, LM, utilise des zones reconstruites voisines, comprenant une zone supérieure et une zone gauche du bloc codé LM, pour dériver un ensemble de paramètres LM du bloc codé LM associé à un modèle linéaire 1 reliant les pixels de luminance et les pixels de chrominance du bloc codé LM, la zone supérieure du bloc codé LM comprenant N lignes supérieures d’échantillons de luminance reconstruits voisins supérieurs et la zone gauche du bloc codé LM comprenant N colonnes gauches d’échantillons de luminance reconstruits voisins gauches, N étant un entier supérieur à 1, le procédé comprenant :

réception (810) de données d'entrée côté encodeur ou côté décodeur, dans lesquelles les données d'entrée comprennent des données de pixels associées à un bloc courant à encoder côté encodeur ou des données compressées associées au bloc courant à décoder côté décodeur ;
lorsqu'une zone supérieure actuelle ou une zone gauche actuelle du bloc actuel se trouve au-delà d'une limite restreinte (820), où la limite restreinte est une limite CTU, une limite de tranche, une limite de tuile, une limite de groupe de tuiles, une limite d'image ou toute autre limite qui entraîne une limitation ou une insuffisance de référence aux échantillons de luminance reconstruits voisins supérieurs et/ou aux échantillons de luminance reconstruits voisins de gauche :

dérivant (830) un ensemble de paramètres LM actuel pour le bloc actuel basé sur les pixels de luminance et les pixels de chrominance dans les zones reconstruites voisines réduites, dans lesquelles les zones reconstruites voisines réduites comprennent une zone supérieure réduite ayant moins de N lignes supérieures d'échantillons de luminance reconstruits voisins supérieurs si la zone supérieure actuelle traverse la limite restreinte ou une zone gauche réduite ayant moins de N colonnes gauches d'échantillons de luminance reconstruits voisins gauches si la zone gauche actuelle traverse la limite restreinte ;
dans lequel, si les échantillons reconstruits voisins supérieurs se trouvent de l'autre côté d'une limite restreinte et sont inaccessibles, une syntaxe est utilisée pour indiquer quels échantillons de la colonne de gauche ou tous les échantillons de la colonne de gauche sont utilisés dans la dérivation de l'ensemble de paramètres LM, dans lequel, si deux échantillons de colonne reconstruits voisins de gauche sont autorisés, la syntaxe est utilisée pour indiquer la sélection des candidats d'échantillons de colonne de gauche, dans lequel les candidats d'échantillons de colonne de gauche comprennent une colonne de gauche d'échantillons de luminance reconstruits voisins de gauche dérivés de la deuxième colonne de gauche la plus proche du bloc actuel, une colonne de gauche d'échantillons de luminance reconstruits voisins de gauche dérivés de la quatrième colonne de gauche la plus proche du bloc actuel, et deux colonnes de gauche d'échantillons de luminance reconstruits voisins de gauche dérivés de la deuxième et de la quatrième colonne de gauche les plus proches du bloc actuel ;
dans lequel, si les échantillons reconstruits voisins de gauche se trouvent de l'autre côté d'une limite restreinte et sont inaccessibles, la syntaxe est utilisée pour indiquer quels échantillons de ligne supérieure ou tous les échantillons de ligne supérieure sont utilisés dans la dérivation de l'ensemble de paramètres LM, dans lequel, si deux échantillons de ligne reconstruits voisins supérieurs sont autorisés, la syntaxe est utilisée pour indiquer la sélection des candidats d'échantillons de ligne supérieure, dans lequel les candidats d'échantillons de ligne supérieure comprennent une ligne supérieure d'échantillons de luminance reconstruits voisins supérieurs dérivés de la première ligne supérieure la plus proche du bloc actuel, une ligne supérieure d'échantillons de luminance reconstruits voisins supérieurs dérivés de la troisième ligne supérieure la plus proche du bloc actuel, et deux lignes supérieures d'échantillons de luminance reconstruits voisins supérieurs dérivés de la première et de la troisième ligne supérieure la plus proche du bloc actuel ;
générant (840) un prédicteur Intra à couleurs croisées pour les pixels de chrominance du bloc actuel en fonction des pixels de luminance du bloc actuel et de l'ensemble de paramètres LM actuel ; et
encodage ou décodage (850) des pixels de chrominance du bloc actuel à l'aide du prédicteur Intra à couleurs croisées,
où le modèle linéaire pour générer un prédicteur LM $P$ pour une chrominance à prédire échantillon avec son s luma reconstruit colocalisé échantillon $V_{col}$ est formulé comme suit :

$$P = a \cdot V_{col} + b .$$

2. Le procédé selon la revendication 1, dans lequel N est égal à 2 et la zone supérieure réduite comprend 1 ligne supérieure si la zone supérieure actuelle dépasse la limite restreinte ou la zone gauche réduite comprend 1 colonne gauche si la zone gauche actuelle dépasse la limite restreinte.

3. Le procédé de la revendication 1, si les échantillons reconstruits voisins supérieurs ou gauches se trouvent de l'autre côté de la limite restreinte, alors les échantillons reconstruits voisins supérieurs ou gauches proviennent de la mémoire tampon d'échantillons reconstruits non filtrés du filtrage de boucle.

**4.** Le procédé selon la revendication 1, dans lequel on dérive un ensemble de paramètres LM actuel pour le bloc actuel en fonction des pixels de luminance et des pixels de chrominance dans les zones reconstruites voisines réduites, dans lequel les zones reconstruites voisines réduites comprennent une zone supérieure réduite ayant moins de N lignes supérieures d'échantillons de luminance reconstruits voisins supérieurs si la zone supérieure actuelle se trouve de l'autre côté de la limite restreinte, ou une zone gauche réduite ayant moins de N colonnes gauches d'échantillons de luminance reconstruits voisins gauches si la zone gauche actuelle se trouve de l'autre côté de la limite restreinte.

**5.** Un appareil pour la prédiction Intra en couleurs croisées basée sur des pixels reconstruits Dans un encodeur ou un décodeur vidéo, un bloc codé selon un modèle linéaire, LM, utilise des zones reconstruites voisines, comprenant une zone supérieure et une zone gauche du bloc codé LM, pour dériver un ensemble de paramètres LM du bloc codé LM associé à un modèle linéaire 1. reliant les pixels de luminance et les pixels de chrominance du bloc codé LM, la zone supérieure du bloc codé LM comprenant N lignes supérieures d'échantillons de luminance reconstruits voisins supérieurs et la zone gauche du bloc codé LM comprenant N colonnes gauches d'échantillons de luminance reconstruits voisins gauches, N étant un entier supérieur à 1, l'appareil comprenant un ou plusieurs composants électroniques ou processeurs agencés pour :

recevoir (810) des données d'entrée côté encodeur ou côté décodeur, dans lesquelles les données d'entrée comprennent des données de pixels associées à un bloc courant à encoder côté encodeur ou des données compressées associées au bloc courant à décoder côté décodeur ;
lorsqu'une zone supérieure actuelle ou une zone gauche actuelle du bloc actuel se trouve au-delà d'une limite restreinte (820), où la limite restreinte est une limite CTU, une limite de tranche, une limite de tuile, une limite de groupe de tuiles, une limite d'image ou toute autre limite qui entraîne une limitation ou une insuffisance de référence aux échantillons de luminance reconstruits voisins supérieurs et/ou aux échantillons de luminance reconstruits voisins de gauche :

dériver (830) un ensemble de paramètres LM actuel pour le bloc actuel basé sur les pixels de luminance et les pixels de chrominance dans les zones reconstruites voisines réduites, dans lesquelles les zones reconstruites voisines réduites comprennent une zone supérieure réduite ayant moins de N lignes supérieures d'échantillons de luminance reconstruits voisins supérieurs si la zone supérieure actuelle traverse la limite restreinte ou une zone gauche réduite ayant moins de N colonnes gauches d'échantillons de luminance reconstruits voisins gauches si la zone gauche actuelle traverse la limite restreinte ;
dans lequel, si les échantillons reconstruits voisins supérieurs se trouvent de l'autre côté d'une limite restreinte et sont inaccessibles, une syntaxe est utilisée pour indiquer quels échantillons de la colonne de gauche ou tous les échantillons de la colonne de gauche sont utilisés dans la dérivation de l'ensemble de paramètres LM, dans lequel, si deux échantillons de colonne reconstruits voisins de gauche sont autorisés, la syntaxe est utilisée pour indiquer la sélection des candidats d'échantillons de colonne de gauche, dans lequel les candidats d'échantillons de colonne de gauche comprennent une colonne de gauche d'échantillons de luminance reconstruits voisins de gauche dérivés de la deuxième colonne de gauche la plus proche du bloc actuel, une colonne de gauche d'échantillons de luminance reconstruits voisins de gauche dérivés de la quatrième colonne de gauche la plus proche du bloc actuel, et deux colonnes de gauche d'échantillons de luminance reconstruits voisins de gauche dérivés de la deuxième et de la quatrième colonne de gauche les plus proches du bloc actuel ;
dans lequel, si les échantillons reconstruits voisins de gauche se trouvent de l'autre côté d'une limite restreinte et sont inaccessibles, la syntaxe est utilisée pour indiquer quels échantillons de ligne supérieure ou tous les échantillons de ligne supérieure sont utilisés dans la dérivation de l'ensemble de paramètres LM, dans lequel, si deux échantillons de ligne reconstruits voisins supérieurs sont autorisés, la syntaxe est utilisée pour indiquer la sélection des candidats d'échantillons de ligne supérieure, dans lequel les candidats d'échantillons de ligne supérieure comprennent une ligne supérieure d'échantillons de luminance reconstruits voisins supérieurs dérivés de la première ligne supérieure la plus proche du bloc actuel, une ligne supérieure d'échantillons de luminance reconstruits voisins supérieurs dérivés de la troisième ligne supérieure la plus proche du bloc actuel, et deux lignes supérieures d'échantillons de luminance reconstruits voisins supérieurs dérivés de la première et de la troisième ligne supérieure la plus proche du bloc actuel ;

générer (840) un prédicteur Intra à couleurs croisées pour les pixels de chrominance du bloc actuel en fonction des pixels de luminance du bloc actuel et de l'ensemble de paramètres LM actuel ; et

encoder ou décoder (850) les pixels de chrominance du bloc actuel en utilisant le prédicteur Intra à couleurs croisées,

où le modèle linéaire pour générer un prédicteur LM P pour une chrominance à prédire échantillon avec son luma reconstruit colocalisé échantillon $V_{col}$ est formulé comme suit :

$$P = a \cdot V_{col} + b \, .$$

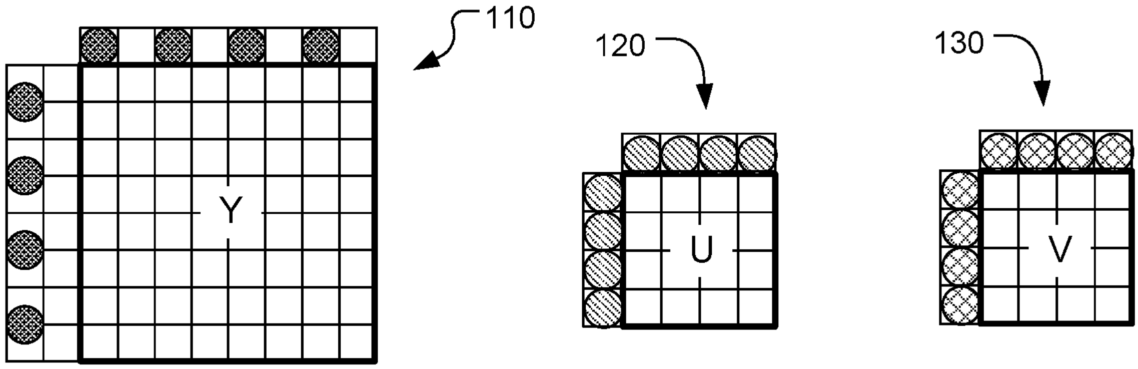


Fig. 1

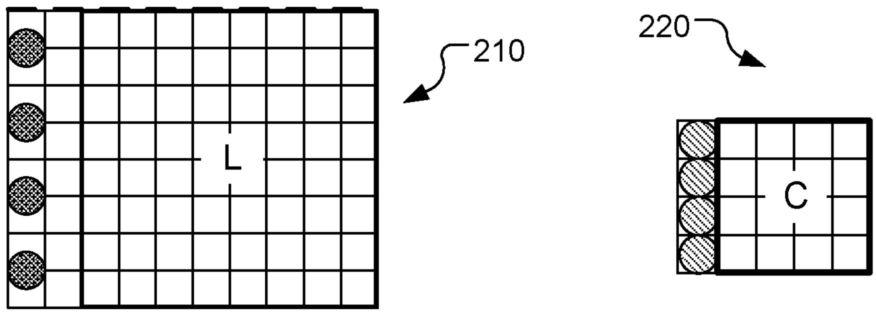


Fig. 2A

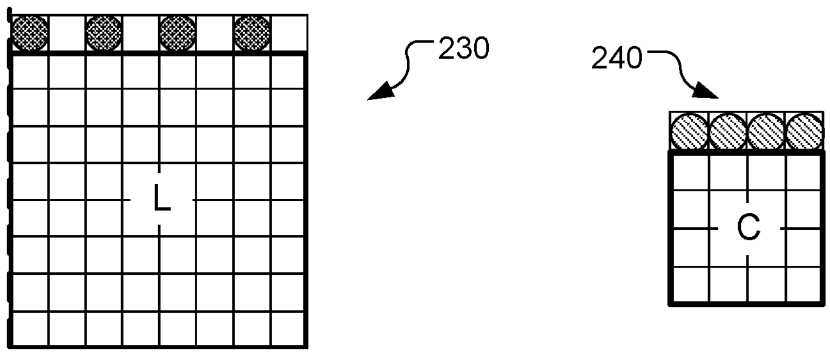


Fig. 2B

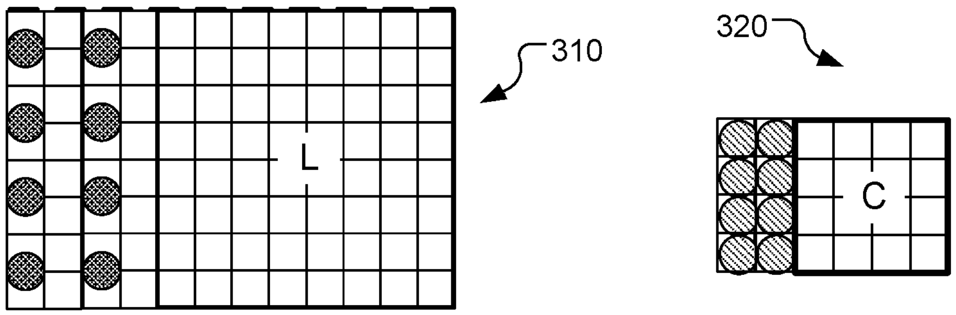


*Fig. 3A*

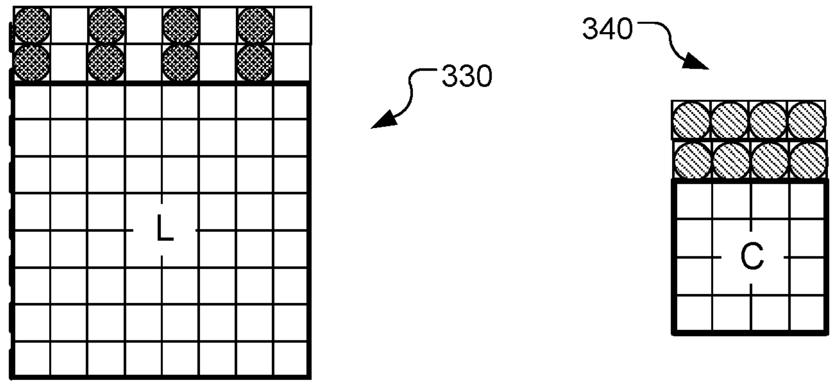


*Fig. 3B*

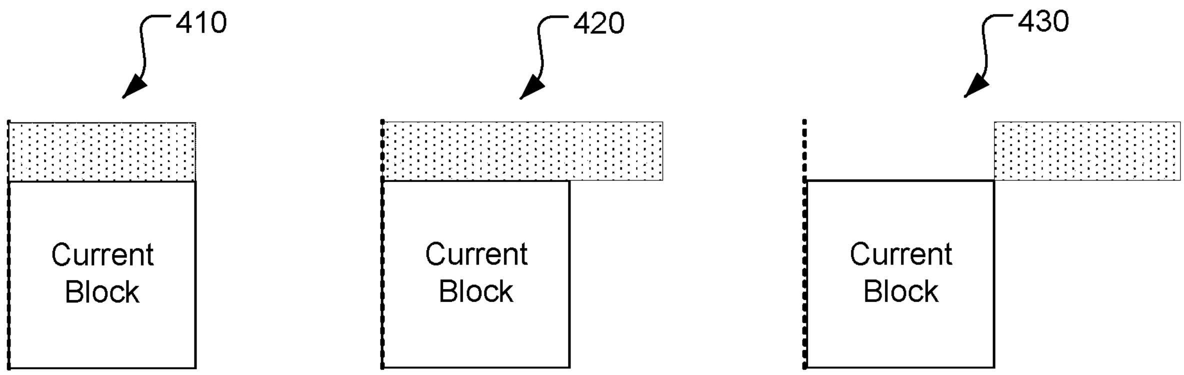


*Fig. 4A*

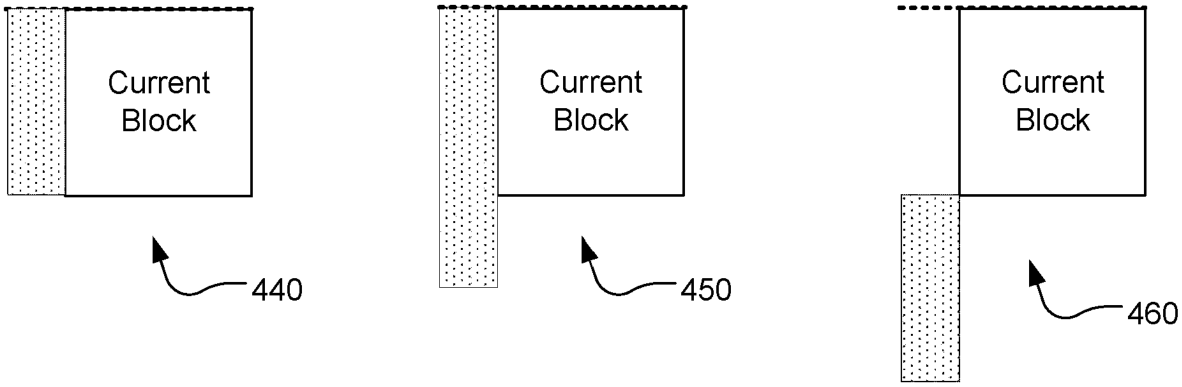


Fig. 4B

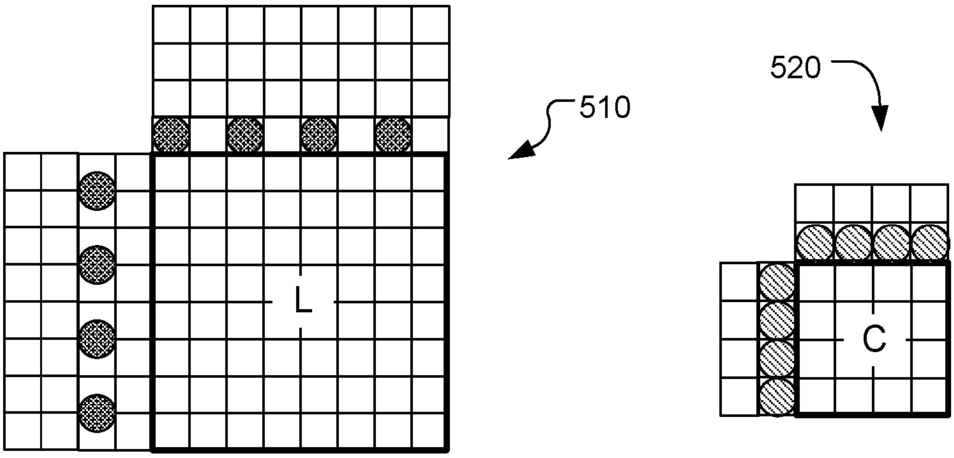


Fig. 5A

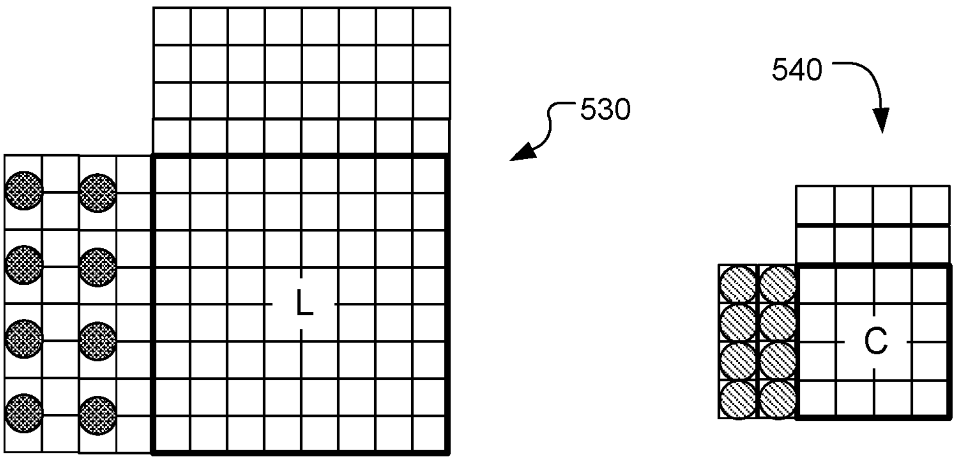


Fig. 5B

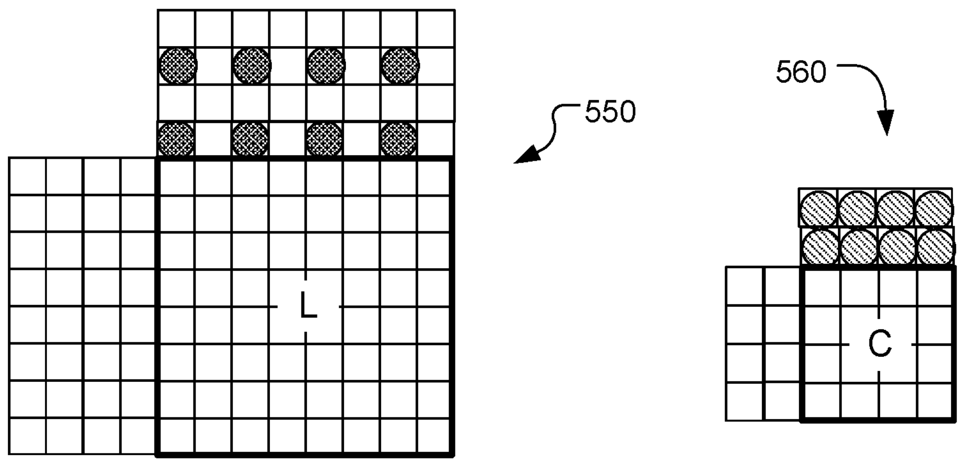


*Fig. 5C*

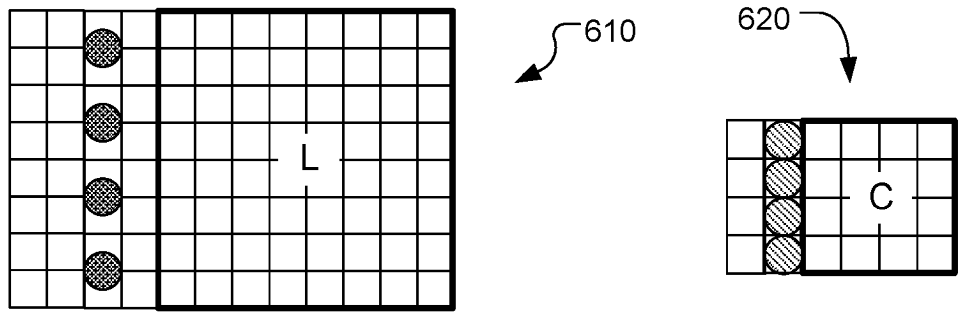


*Fig. 6A*

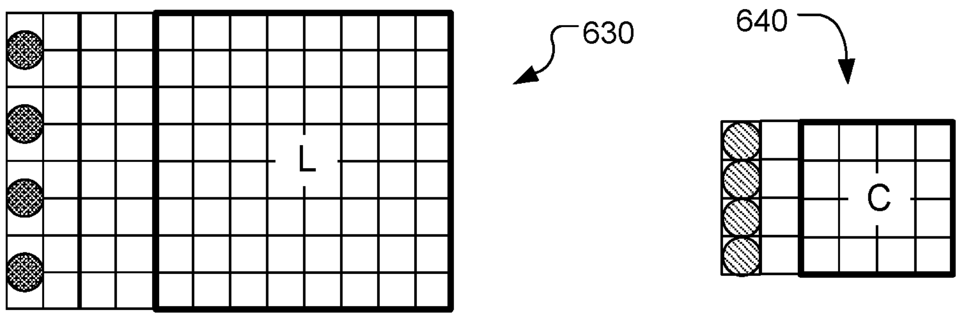


*Fig. 6B*

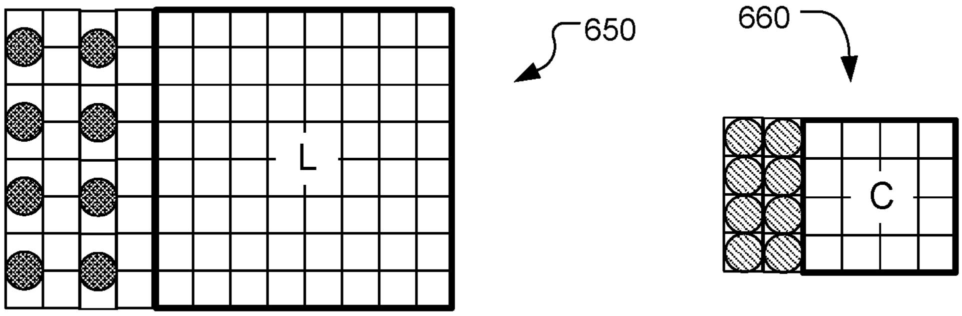


Fig. 6C

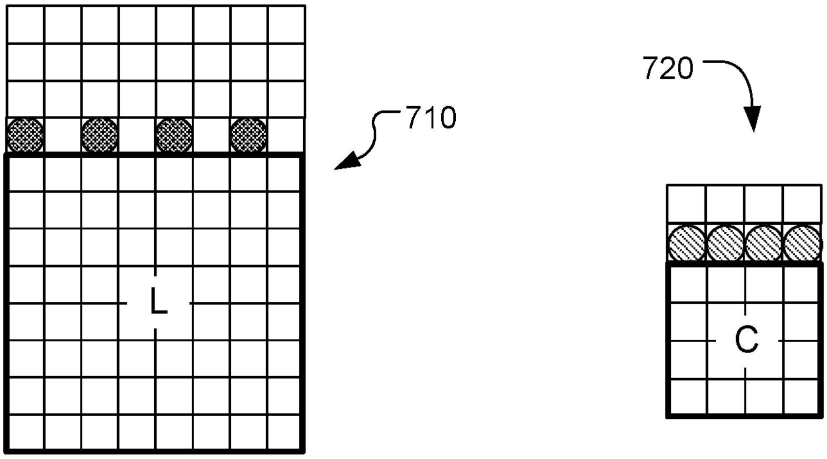


Fig. 7A

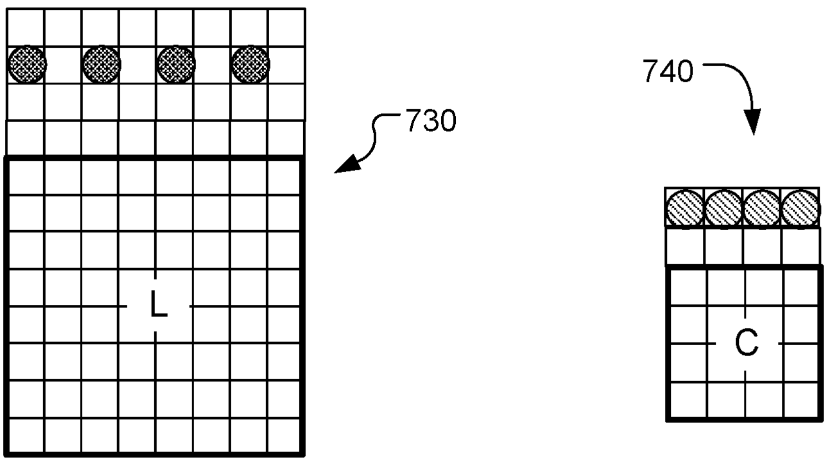


Fig. 7B

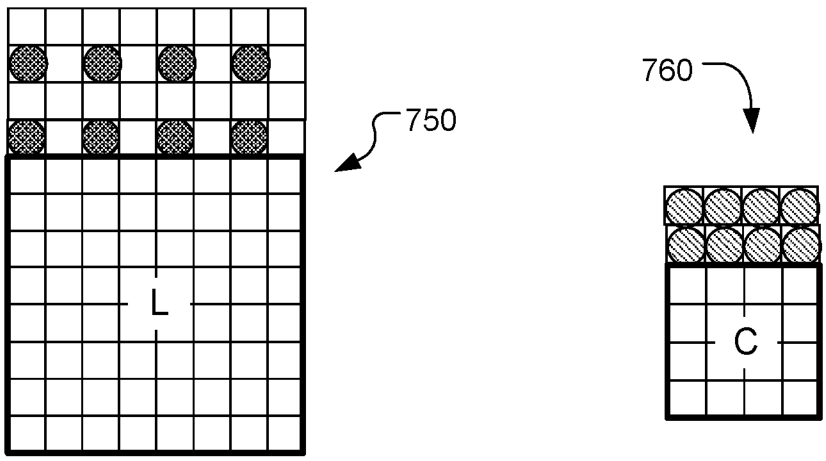


Fig. 7C

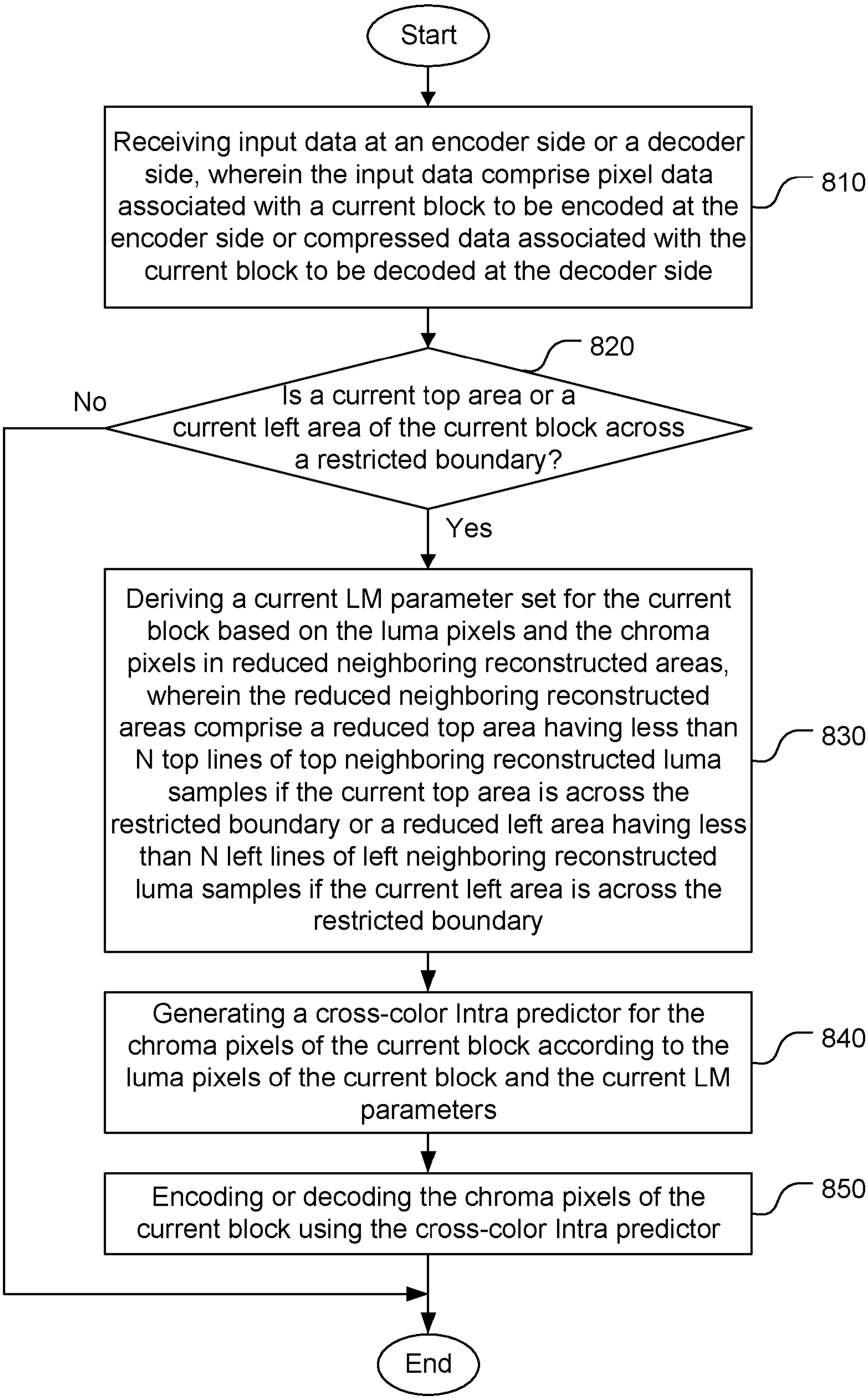
Start
Receiving input data at an encoder side or a decoder side, wherein the input data comprise pixel data associated with a current block to be encoded at the encoder side or compressed data associated with the current block to be decoded at the decoder side
810
820
Is a current top area or a current left area of the current block across a restricted boundary?
No
Yes
Deriving a current LM parameter set for the current block based on the luma pixels and the chroma pixels in reduced neighboring reconstructed areas, wherein the reduced neighboring reconstructed areas comprise a reduced top area having less than N top lines of top neighboring reconstructed luma samples if the current top area is across the restricted boundary or a reduced left area having less than N left lines of left neighboring reconstructed luma samples if the current left area is across the restricted boundary
830
Generating a cross-color Intra predictor for the chroma pixels of the current block according to the luma pixels of the current block and the current LM parameters
840
Encoding or decoding the chroma pixels of the current block using the cross-color Intra predictor
850
End

*Fig. 8*

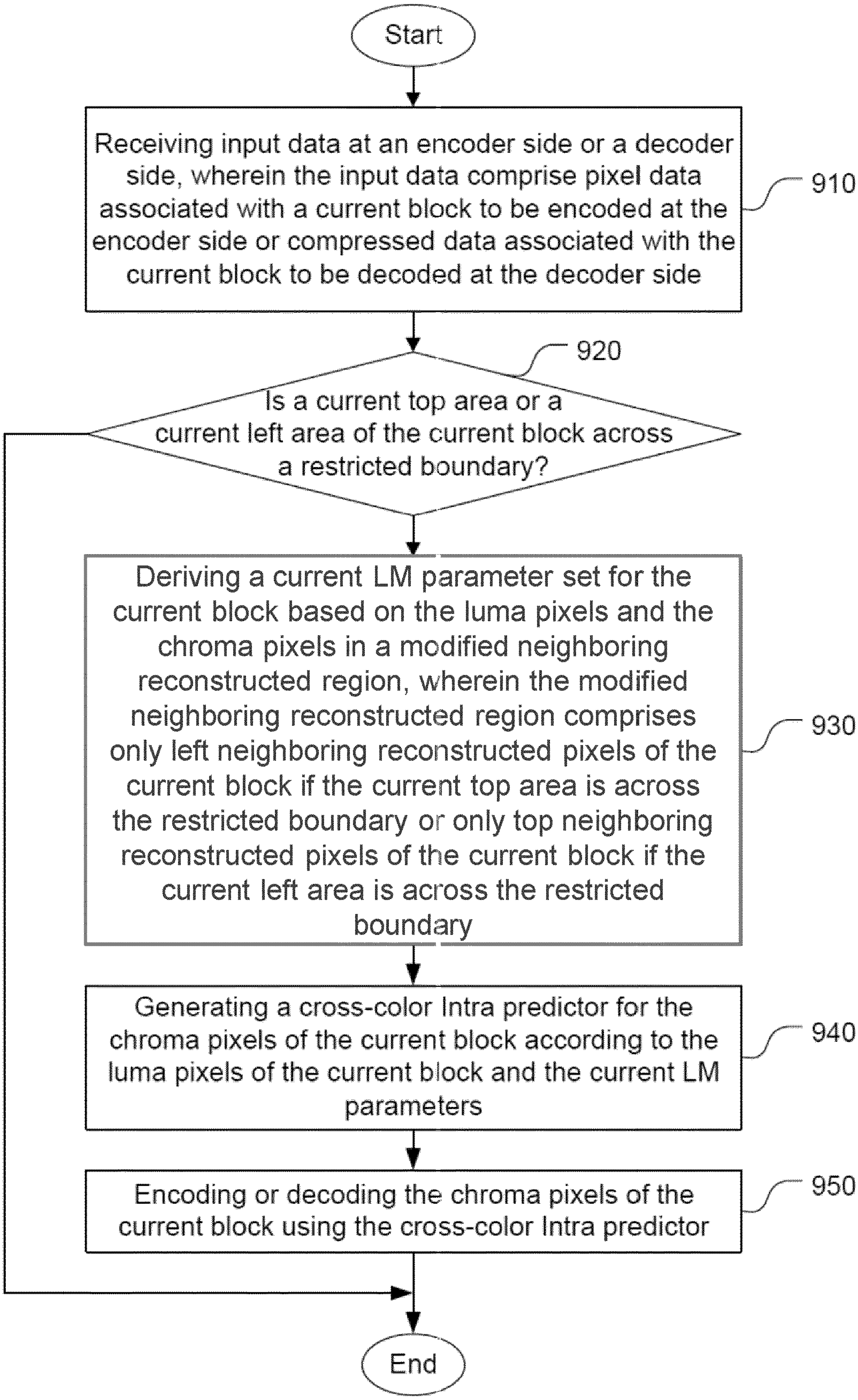
Start
Receiving input data at an encoder side or a decoder side, wherein the input data comprise pixel data associated with a current block to be encoded at the encoder side or compressed data associated with the current block to be decoded at the decoder side
910
Is a current top area or a current left area of the current block across a restricted boundary?
920
Deriving a current LM parameter set for the current block based on the luma pixels and the chroma pixels in a modified neighboring reconstructed region, wherein the modified neighboring reconstructed region comprises only left neighboring reconstructed pixels of the current block if the current top area is across the restricted boundary or only top neighboring reconstructed pixels of the current block if the current left area is across the restricted boundary
930
Generating a cross-color Intra predictor for the chroma pixels of the current block according to the luma pixels of the current block and the current LM parameters
940
Encoding or decoding the chroma pixels of the current block using the cross-color Intra predictor
950
End

*Fig. 9*

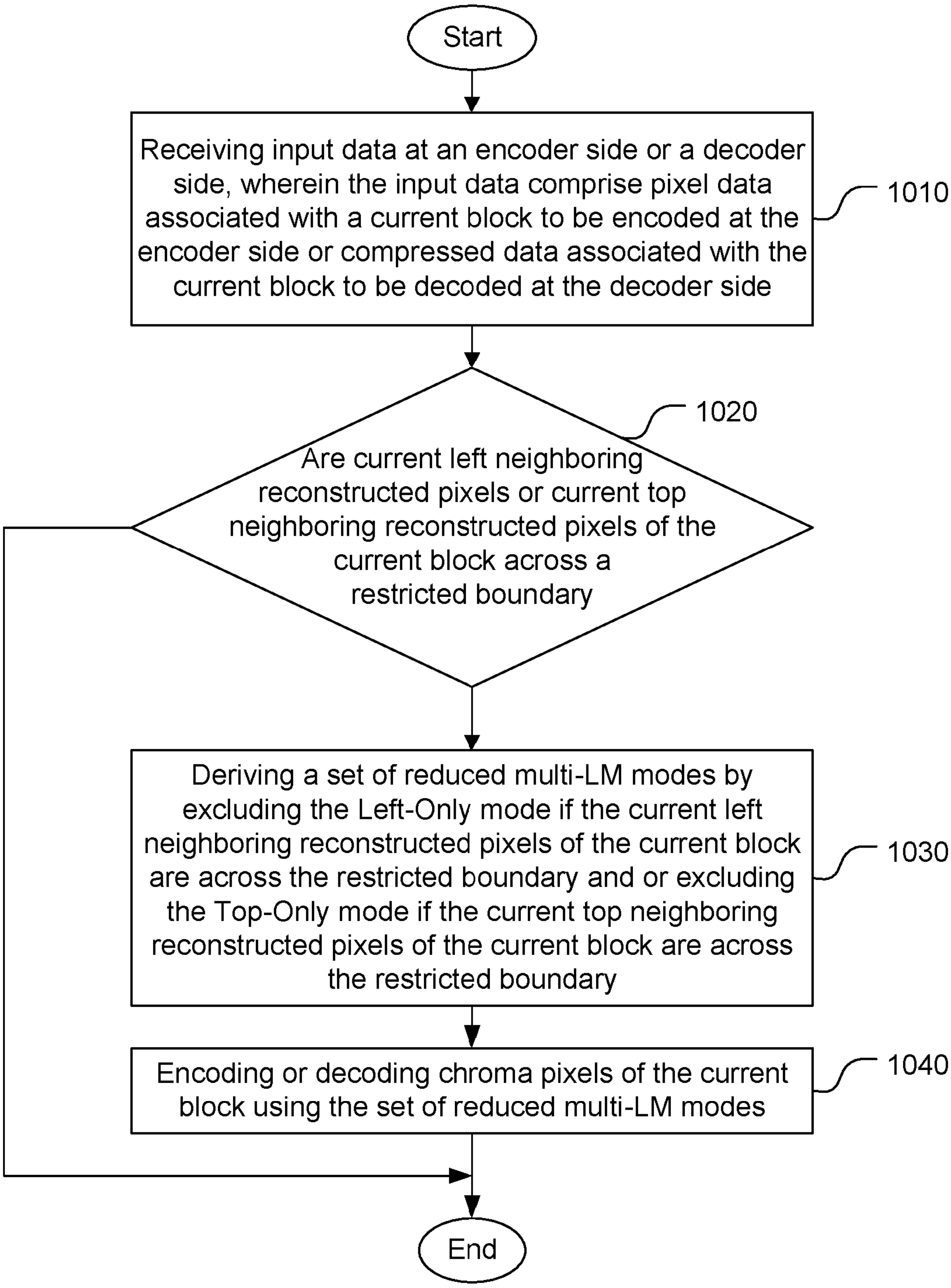
Start
Receiving input data at an encoder side or a decoder side, wherein the input data comprise pixel data associated with a current block to be encoded at the encoder side or compressed data associated with the current block to be decoded at the decoder side
1010
1020
Are current left neighboring reconstructed pixels or current top neighboring reconstructed pixels of the current block across a restricted boundary
Deriving a set of reduced multi-LM modes by excluding the Left-Only mode if the current left neighboring reconstructed pixels of the current block are across the restricted boundary and or excluding the Top-Only mode if the current top neighboring reconstructed pixels of the current block are across the restricted boundary
1030
Encoding or decoding chroma pixels of the current block using the set of reduced multi-LM modes
1040
End

*Fig. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170359595 A1


### Non-patent literature cited in the description


- **C. GISQUET et al.** Non-CE6a: Border-adaptive subsampling for LM mode. *8. JCT-VC Meeting, USA, 1 - 10 February 2012*, 01 February 2012